# FASCICULE DE BREVET EUROPEEN

(11) **EP 0 558 382 B1**
(45) Date de publication et mention de la délivrance du brevet: **11.12.1996**
(21) Numéro de dépôt: 93400417.7
(22) Date de dépôt: 18.02.1993
(51) Int. Cl.: G06K 19/06, G06K 7/06

(54) **Dispositif de lecture d'un code formé sur une pièce par n empreintes**
Vorrichtung zum Lesen eines Kodes, der aus Abdrucken auf einem Gegenstand hergestellt ist
Device for reading a code formed on an object by n impressions

(30) Priorité: 27.02.1992 FR 9202290
(43) Date de publication de la demande: 01.09.1993
(73) Titulaire: RENAULT AUTOMATION, F-92100 Boulogne (FR)
(72) Inventeur: Thurier, Yvan, F-94320 Thiais (FR)
(74) Mandataire: Robert, Jean-Pierre

(56) Documents cités:
- EP-A- 0 451 044
- FR-A- 2 515 391
- PATENT ABSTRACTS OF JAPAN vol. 13, no. 547 (P-971) 7 Décembre 1989 & JP-A-12 27 072

## Description

La présente invention concerne un dispositif pour lire un code d'identification d'objets notamment des composants mécaniques.

Lorsqu'il s'agit de composants mécaniques destinés à être assemblés, par exemple en construction automobile, les codes qui leurs sont appliqués consistent en des empreintes réalisées à l'intérieur d'un périmètre précis qui peut être palpé par des touches mécaniques.

Le palpeur comporte autant de touches qu'il y a d'endroits possibles prédéterminés pour les empreintes à l'intérieur de ce périmètre, et le code consiste en deux empreintes parmi le nombre possible qui peut être 13 ou 15.

D'une manière connue, les touches sont maintenues en saillie à l'extérieur d'une surface de référence du palpeur par des organes élastiques si bien qu'une opération de lecture de code provoque l'enfoncement de toutes les touches qui ne se trouvent pas en face d'une empreinte. On comprend-qu'il suffit d'associer à chaque touche un capteur de position qui émette un signal électrique à deux niveaux (par exemple de tension) chaque niveau correspondant à une position de la touche.

Le palpeur est connecté à une unité d'interprétation de la lecture qui est programmée pour déterminer le code lu en fonction des deux touches qui restent en position sortie. Il est nécessaire de créer entre l'unité d'interprétation et les conducteurs provenant du palpeur un organe d'interfaçage pour rendre les signaux des capteurs compatibles avec l'unité de leur traitement qui est le plus souvent un automate programmable ou une unité à commande numérique.

La présente invention entend simplifier la liaison entre le palpeur et l'unité de traitement et d'interprétation des signaux de sorte que cette liaison puisse être effectuée par un câble standard soit plat, soit cylindrique avec des broches de connexion standard.

A cet effet, elle a donc pour objet un dispositif de lecture d'un code formé sur une pièce par n empreintes réalisées parmi N emplacements d'empreinte possibles, comportant N touches qui sont montées chacune à coulissement dans un support entre une position rentrée correspondant à l'absence d'empreinte et une position sortie correspondant à la présence d'une empreinte, un organe élastique de rappel qui est attelé entre le support et la touche pour solliciter en permanence la touche en direction de sa position sortie, et un capteur qui est associé à chaque touche et qui délivre une information différente selon que la touche est dans sa position rentrée ou dans sa position sortie ; chaque capteur est relié à l'une des N entrées d'adresses que comporte une mémoire électronique chargée pour chaque adresse d'une donnée numérique significative du code correspondant à l'adresse définie par les n touches activées lors de la lecture, qui peut être lue lorsque la mémoire reçoit les signaux de n capteurs et délivrée et transmise par un bus de données à une unité de traitement des données.

Par cette mémoire, les signaux du palpeur sont convertis en des données qui sont immédiatement transmissibles à une unité de traitement qui vient la lire par l'instruction du microprocesseur qu'elle contient.

Le composant électronique qui constitue la mémoire est avantageusement logé dans le support des touches du palpeur de sorte que ce palpeur devient un périphérique mobile à connexion normalisée d'un automate programmable ou une commande numérique.

Dans un mode préféré de réalisation, il est suffisant de choisir n égal à 2 et N égal à 13 ou 15 ce qui permet de réaliser 78 ou 105 codes différents.

Les valeurs numériques à inscrire en mémoire n'étant donc pas supérieures à 128, il suffit de 7 bits pour l'enregistrement et la lecture de ces valeurs. Bien entendu, la liaison automate/mémoire sera assurée avec un câble possédant d'autres conducteurs pour les signaux de validation, pour l'alimentation et le contrôle du retour en position sortie de toutes les touches, notamment.

D'autres caractéristiques et avantages ressortiront de la description d'un exemple de réalisation de l'invention donné ci-après en référence aux dessins annexés dans lesquels:
- la figure 1 est une vue schématique en coupe longitudinale d'un palpeur selon l'invention,
- la figure 2 est une coupe selon la ligne II-II de la figure 1,
- la figure 3 est une coupe selon la ligne III-III de la figure 2,
- la figure 4 est une vue suivant F de la figure 1
- la figure 5 est une vue de dessus de la zone de chaque pièce explorée par le palpeur,
- les figures 6 et 7 sont des tableaux de codes possibles avec un palpeur à 15 touches et un palpeur à 13 touches,
- la figure 8 est le schéma du circuit électronique placé entre les touches et l'unité centrale de traitement des données.

Le palpeur utilisé dans l'invention est de constitution générale connue. Il comporte un boîtier support 1 dans lequel sont montées coulissantes quinze touches, référencées 2 à 16. Chaque touche est une tige qui fait saillie du support 1 au travers d'une surface lA sous l'effet d'un ressort de rappel 17.

Les touches sont en réalité divisées en une partie inférieure qui fait saillie hors du boîtier 1 et une partie supérieure qui agit comme un poussoir des parties inférieures et sur lequel s'exerce le ressort 17.

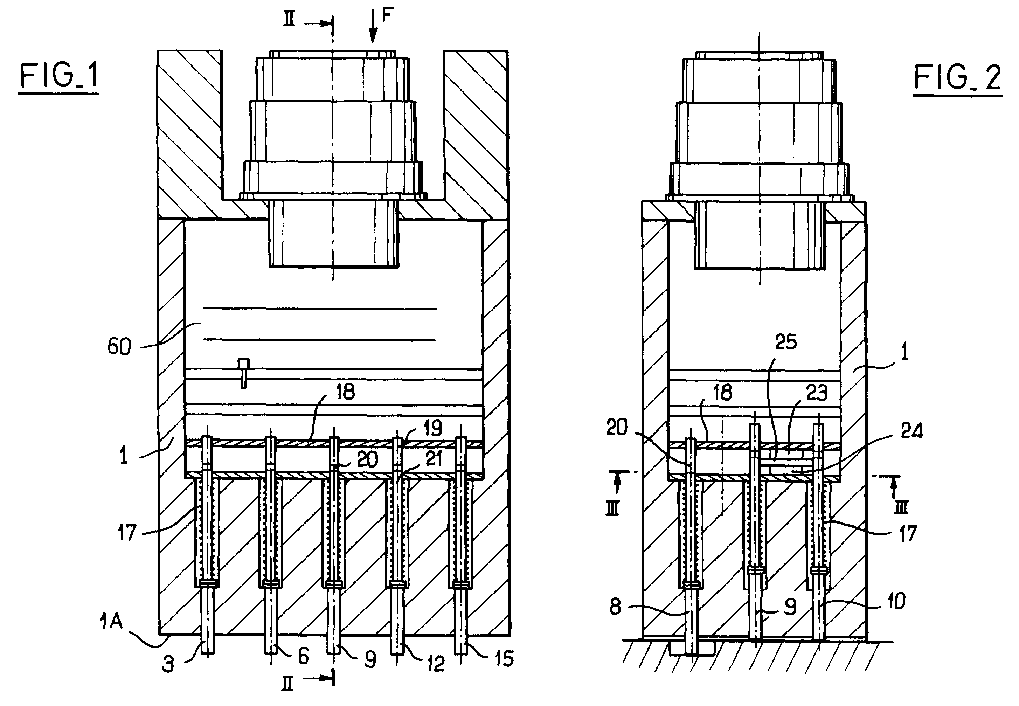

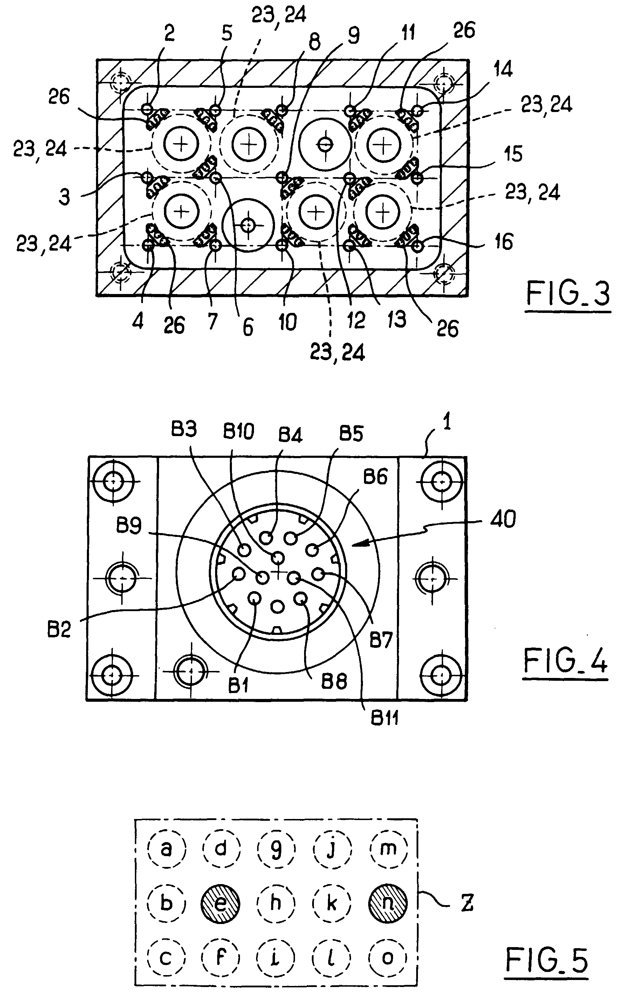

La partie supérieure de chaque poussoir traverse une cloison 18 interne au boîtier et constitue la partie mobile d'un capteur de position des touches. Cette partie peut actionner un contact pour fermer ou ouvrir un circuit ou, comme représenté, coopérer avec un capteur à effet Hall et des aimants. Cette disposition est décrite dans le document EP-A 451 044. Chaque poussoir comporte une gaine tubulaire qui renferme une partie supérieure magnétique 19, une partie amagnétique 20 et une partie inférieure magnétique 21. Chaque poussoir est associé à une paire d'aimants 23, 24 séparés par une plaque 25. La figure 3 montre que 6 paires d'aimants 23, 24 suffisent pour coopérer avec les extrémités de quinze poussoirs. Entre ces aimants et les poussoirs, on a disposé un capteur à effet Hall noté 26 sur la figure 3 et situé à cheval sur la tranche de la cloison 25 séparant les deux aimants 23, 24. Comme l'explique le document cité ci-dessus , en fonction de la position de la touche, donc du poussoir et donc de la partie amagnétique de celui-ci, le flux magnétique produit par un aimant traverse le capteur 26 tandis que l'autre flux produit par l'autre aimant ne traverse pas le capteur. Au cas où la touche est en position sortie, comme la touche 8 de la figure 2, la partie amagnétique 20 du poussoir correspondant est dans sa position basse. Le flux magnétique produit par l'aimant 23 (supérieur) voisin de la touche 8 est bouclé sur le capteur 26 par la partie magnétique supérieure 19 du poussoir tandis que le bouclage du flux magnétique produit par l'aimant 24 est interrompu par la partie amagnétique 20.

A l'inverse, quand la touche est en position haute (rentrée), le circuit magnétique de l'aimant 24 est bouclé tandis que celui de l'aimant 23 est interrompu. Le capteur a effet Hall concerné émet donc deux signaux différents selon la position des touches.

Les quinze touches sont destinées à explorer une zone Z (figure 5) d'une pièce qui comporte un espace suffisant pour recevoir une empreinte circulaire telle que celle n d'un diamètre de l'ordre de 7 mm dans quinze emplacements différents, notés de a à o sur la figure 5.

Le code qui sera porté par la pièce consistera en deux empreintes (par exemple e et n) parmi les quinze emplacements possibles.

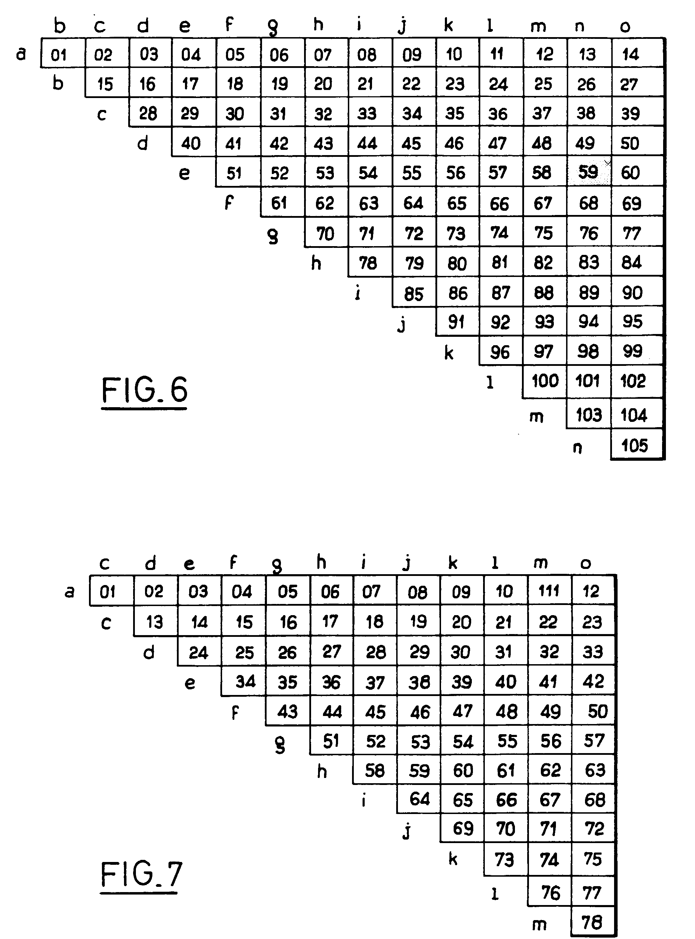

Le tableau de la figure 6 donne la valeur numérique 59 à ce code e-n. Le palpeur décrit aux figures 1 et 3 qui serait placé sur une zone Z telle que celle de la figure 5 aurait les touches 6 et 15 en position sortie. Les capteurs à effet Hall associés aux poussoirs de ces touches émettrait donc un signal significatif de cette position "sortie".

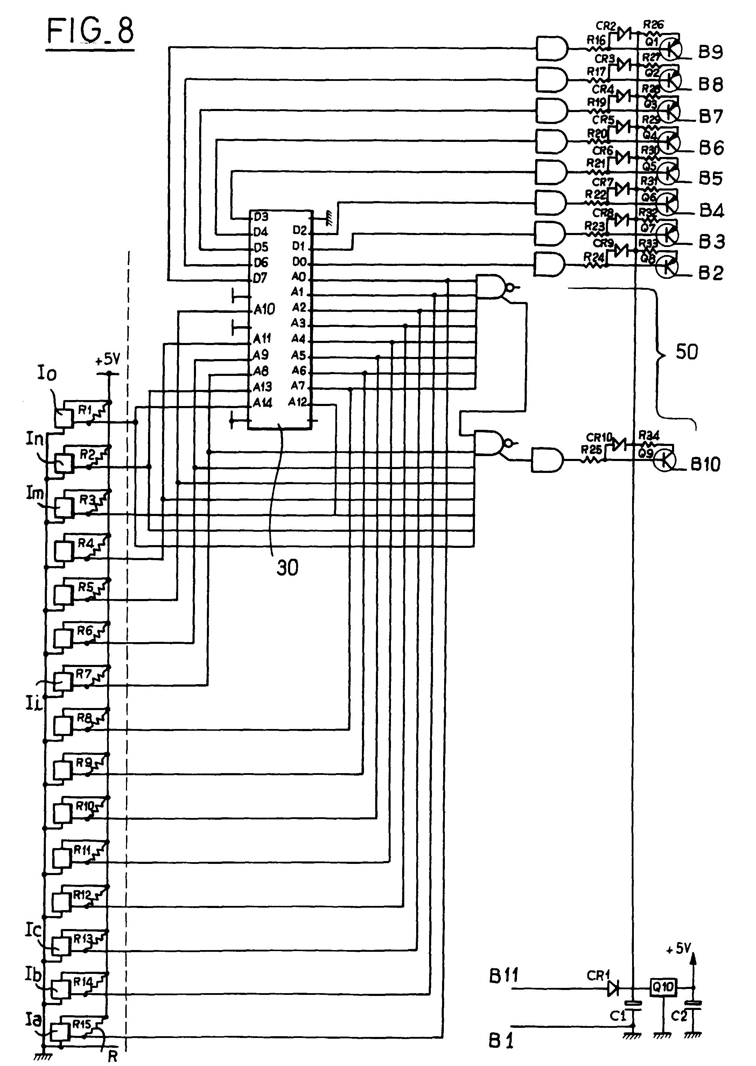

L'invention propose un moyen simple pour l'exploitation du signal émis par ces deux capteurs. Il est constitué par un composant électronique du commerce sous forme d'une mémoire ROM, (mémoire à lecture seule) programmable. Cette mémoire 30 sur la figure 8 comporte quinze entrées d'adresses et huit entrées de données. La programmation consiste à affecter à une adresse le nombre code correspondant. Par exemple, la présence d'un signal de niveau un sur les entrées d'adresse 5 et 14 de la mémoire 30 active l'adresse d'un code correspondant à deux empreintes parmi quinze situées aux emplacements e et n de la figure 5. A cette adresse, on peut donc écrire lors de la programmation de la mémoire le nombre 59 au moyen de sept bits soit 1-1-1-0-1-1.

Parmi toutes les adresses possibles d'une mémoire à 2¹⁶ adresses, on en utilise 105 pour loger les 105 valeurs possibles du code d'une pièce identifiée par deux empreintes parmi quinze. Si le code était de deux empreintes parmi 13, le nombre de valeurs différentes serait de 78 comme le montre le tableau de la figure 7.

Ainsi, lorsqu'une adresse est activée, la mémoire délivre par sept de ses huit sorties de données une valeur, la huitième étant un signal de validation. Ce signal à sept bits peut donc être aisément conduit par une liaison standard à par exemple un automate programmable d'interprétation et de traitement.

La figure 4 représente le connecteur du palpeur vu suivant F de la figure 1. Ce connecteur 40 et un connecteur classique du type DIN 43 651 qui comporte 12 broches. Par exemples les sept broches B2 à B8 sont les broches porteuse du signal code à sept bits et la broche B9 est celle du signal de validation.

Sur la figure 8 on retrouve les broches de connexion avec les mêmes références. On peut considérer que le signal émis par chaque capteur à effet Hall ferme un interrupteur Ia-Io lorsque la touche est sortie et l'ouvre lorsqu'elle est rentrée. Ainsi quand l'interrupteur est fermé, la résistance R à ses bornes est court-circuitée et la tension + 5v et appliquée à l'entrée d'adresse correspondante. Quand cet interrupteur Ia-Io est ouvert, la tension est environ 0V. On notera par ailleurs qu'en dérivation à l'entrée d'adresse de la mémoire 30, chaque interrupteur est relié à une fonction ET 50 qui permet de délivrer un signal de contrôle de la sortie de toutes les touches. En effet, si celles-ci sont toutes sorties, la tension de tous les conducteurs à l'entrée de la fonction ET est nulle et en sortie on trouve un état de tension validant la bonne position de touches. En revanche, si l'une d'elles est coincée et n'est pas repoussée par le ressort 17, le signal en sortie de la fonction ET invalide le palpeur. Ce signal est présent sur la broche B10. Les broches B11 et B1 sont celles d'alimentation et de mise à la masse.

Le circuit électronique représenté à la figure 8 peut être réalisé sur une petite carte qu'il est aisé de loger dans le boîtier support 1 du palpeur par exemple à l'endroit 60 indiqué en figure 1.

Le palpeur ainsi équipé peut être traité par n'importe quelle unité de traitement (micro-ordinateur ou automate, commande numérique.....) comme un organe périphérique standard.

## Revendications

1. Dispositif de lecture d'un code formé sur une pièce par n empreintes réalisées parmi N emplacements d'empreintes possibles, comportant N touches (2-16) qui sont montées chacune à coulissement dans un support (1) entre une position rentrée correspondant à l'absence d'empreinte (a - o) et une position sortie correspondant à la présence d'une empreinte, un organe élastique (17) de rappel qui est attelé entre le support (1) et la touche (2-16) pour solliciter en permanence la touche en direction de sa position sortie, et un capteur (26) qui est associé à chaque touche et qui délivre une information différente selon que la touche est dans sa position rentrée ou dans sa position sortie, caractérisé en ce que la sortie de chaque capteur est reliée à l'une de N entrées d'adresses que comporte une mémoire (30) électronique chargée pour chaque adresse d'une donnée numérique binaire significative du code correspondant à l'adresse définie par les n touches activée lors de la lecture, qui peut être lue lorsque la mémoire (30) reçoit les signaux de n capteurs activés et transmise à une unité de traitement des données.

2. Dispositif selon la revendication 1 caractérisé en ce que la mémoire (30) est logée dans le support (1) des touches.

3. Dispositif selon la revendication 1 ou 2 caractérisé en ce que n = 2 et N = 13.

4. Dispositif selon l'une des revendications 1 et 2 caractérisé en ce que n = 2 et N = 15.

5. Dispositif selon l'une des revendications 3 et 4 caractérisé en ce que les données numériques sont à sept bits.

## Claims

1. An apparatus for reading a code formed on a member by n impressions produced from N possible impression locations, comprising N keys (2-16) which are each mounted slidably in a support (1) between a retracted position corresponding to the absence of impression (a - o) and an extended position corresponding to the presence of an impression, a resilient return member (17) which is connected between the support (1) and the key (2-16) to continuously urge the key in the direction of its extended position, and a sensor (26) which is associated with each key and which delivers a different item of information according to whether the key is in its retracted position or in its extended position, characterised in that the output of each sensor is connected to one of N address inputs of an electronic memory (30) which is loaded for each address with a significant binary digital datum of the code corresponding to the address defined by the n keys activated in the reading operation, which can be read when the memory (30) receives the signals from n activated sensors and transmitted to a data processing unit.

2. Apparatus according to claim 1 characterised in that the memory (30) is accommodated in the support (1) for the keys.

3. Apparatus according to claim 1 or claim 2 characterised in that n = 2 and N = 13.

4. Apparatus according to one of claims 1 and 2 characterised in that n = 2 and N = 15.

5. Apparatus according to one of claims 3 and 4 characterised in that the digital data are seven-bit data.

## Patentansprüche

1. Vorrichtung zum Lesen eines Codes, der aus n an einem Gegenstand realisierten Vertiefungen unter N möglichen Vertiefungsstellen besteht, mit N Tastelementen (2 bis 16), die jeweils gleitend in einer Halterung (1) gelagert und zwischen einer zurückgezogenen Position, die dem Fehlen einer Vertiefung entspricht (a bis o) und einer ausgefahrenen Position, die dem Vorhandensein einer Vertiefung entspricht, verschiebbar sind, mit einem elastischen Rückstellelement (17), das zwischen der Halterung (1) und dem Tastelement (2 bis 16) angeordnet ist, um das Tastelement ständig in Richtung auf seine ausgefahrene Position hin vorzuspannen, und mit einem mit jedem Tastelement verbundenen Sensor (26), der je nachdem, ob das Tastelement in seiner eingefahrenen oder in seiner ausgefahrenen Position ist, ein unterschiedliches Signal abgibt, dadurch **gekennzeichnet**, daß der Ausgang jedes Sensors mit einem von N Adresseneingängen eines elektronischen Speichers (30) verbunden ist, in dem für jede Adresse ein binäres numerisches Datum gespeichert ist, welches den Code bezeichnet, der der Adresse entspricht, die durch die beim Lesen aktivierten n Tasten definiert wird, und das, wenn der Speicher (30) die Signale von n aktivierten Sensoren empfängt, gelesen und einer Datenverarbeitungseinheit zugeführt werden kann.

2. Vorrichtung nach Anspruch 1, dadurch **gekennzeichnet**, daß der Speicher (30) in der Halterung (1) für die Tastelemente aufgenommen ist.

3. Vorrichtung nach Anspruch 1 oder 2, dadurch **gekennzeichnet**, daß n = 2 und N = 13.

4. Vorrichtung nach einem der Ansprüche 1 und 2, dadurch **gekennzeichnet**, daß n = 2 und N = 15.

5. Vorrichtung nach einem der Ansprüche 3 und 4, dadurch **gekennzeichnet**, daß die numerischen Daten sieben Bits enthalten.
